# EUROPÄISCHE PATENTSCHRIFT

(11) **EP 1 124 123 B1**
(45) Veröffentlichungstag und Bekanntmachung des Hinweises auf die Patenterteilung: **02.07.2008**
(21) Anmeldenummer: 01102360.3
(22) Anmeldetag: 02.02.2001
(51) Int. Cl.: G01M 1/32

(54) **Vorrichtung zum Befestigen von Ausgleichsgewichten zum Unwuchtausgleich**
Device for fixing balancing compensating weights
Dispositif de fixation de poids de compensation de balourd

(30) Priorität: 11.02.2000 DE 10006176
(43) Veröffentlichungstag der Anmeldung: 16.08.2001
(73) Patentinhaber: Schenck RoTec GmbH, 64293 Darmstadt (DE)
(72) Erfinder: Ertl, Walter, 64319 Pfungstadt (DE)
(74) Vertreter: Haar, Lucas Heinz Jörn

(56) Entgegenhaltungen:
- DE-A- 19 922 085
- DE-A1- 4 440 812
- US-A- 5 557 043

## Beschreibung

Die Erfindung betrifft eine Vorrichtung zum Befestigen von eine Klebeschicht aufweisenden Ausgleichsgewichten zum Unwuchtausgleich an einer konkav gekrümmten Befestigungsfläche eines drehbaren Bauteils, insbesondere eines Fahrzeugrades, mit einer Halteeinrichtung, die zwei Halteteile zum Festhalten eines Ausgleichsgewichts und zwischen den Halteteilen ein an eine der Klebeschicht entgegengesetzte Rückenfläche des Ausgleichsgewichts andrückbares Andrückelement aufweist, und mit einer Führungseinrichtung, mit welcher die Halteeinrichtung an die Unwuchtausgleichsstelle der Befestigungsfläche führbar und dort an das drehbare Bauteil andrückbar ist.

Bei einer aus EP 0 681 169 B1 bekannten Vorrichtung der angegebenen Art wird das Ausgleichsgewicht mit Hilfe der Führungseinrichtung mit einer Kante, die an der Seite liegt, an welcher sich die Klebeschicht befindet, an die Befestigungsfläche angesetzt. Über ein als Bolzen ausgebildetes Druckübertragungsmittel wird anschließend auf das Ausgleichsgewicht ein gegen die Befestigungsfläche gerichteter Druck ausgeübt, wodurch das Ausgleichsgewicht um die Kante schwenkt und mit der Klebefläche an die Befestigungsfläche angedrückt wird. Der Druck auf das Ausgleichsgewicht kann durch eine automatische Betätigungseinrichtung, z.B. einen Hubmagneten, hergestellt werden. Diese bekannte Einrichtung eignet sich nur für Ausgleichsgewichte von relativ kompakter Formgestalt, da der Anpreßdruck nur an einem Punkt auf das Ausgleichsgewicht übertragen wird.

Aus DE 44 40 812 C2 ist eine Vorrichtung zum Ankleben von Wuchtgewichten an Wellen bekannt, die aus einer Anpreßeinrichtung besteht, die im wesentlichen einen Grundkörper aufweist, der eine elastische, höhenverstellbare Aufnahme für das Wuchtgewicht sowie darunter angeordnete, vom Wellenmittelpunkt zum Wellenumfang schwenkbar gelagerte Führungsleisten und zwischen den Führungsleisten und unterhalb der elastischen Aufnahme eine ebenfalls höhenverstellbar gelagerte Formschale zum Anpressen der Wuchtgewichte trägt. Diese Vorrichtung eignet sich nur für konvex gekrümmte Befestigungsflächen.

Der Erfindung liegt die Aufgabe zugrunde, eine Vorrichtung der eingangs genannten Art zu schaffen, die eine automatische Befestigung selbstklebender Ausgleichsgewichte von unterschiedlicher und auch größerer Länge insbesondere auch an konkav gekrümmtem Befestigungsflächen ermöglicht.

Die Aufgabe wird erfindungsgemäß dadurch gelöst, daß das Andrückelement eine in Abhängigkeit von der Andrückkraft verformbare Andrückfläche hat, an der das Ausgleichsgewicht mit seiner Rückenfläche anliegt, daß die Andrückfläche in der unbelasteten Grundstellung des Andrückelements eine solche Form hat, daß die Andrückkraft im mittleren Bereich des Ausgleichsgewichts übertragen wird und daß mit wachsender Andrückkraft die Andrückfläche derart verformbar ist, daß die Andrückkraft auch auf die Enden des Ausgleichsgewichts übertragen wird.

Die erfindungsgemäße Vorrichtung ermöglicht das Andrücken eines selbstklebenden Ausgleichsgewichts an die Befestigungsfläche eines auszuwuchtenden Bauteils in der Weise, daß das Ausgleichsgewicht zunächst in der Mitte und von dort in Umfangsrichtung des Bauteils fortschreitend bis zu den beiden Enden hin angedrückt wird. Hierdurch wird der Einschluß von Luftblasen zwischen der Klebeschicht und dem Bauteil vermieden und eine sichere Haftung des Ausgleichsgewichts gewährleistet. Die erfindungsgemäße Vorrichtung hat weiterhin den Vorteil, daß sie sich innerhalb bestimmter Grenzen selbsttätig an unterschiedliche Krümmungsradien von Befestigungsflächen für Ausgleichsgewichte anpassen kann, da sich die Krümmung der Andrückfläche des Andrückelements mit wachsender Andrückkraft der Krümmung des an die Befestigungsfläche angedrückten Ausgleichsgewichts anpaßt. Die Andrückfläche kann in Längsrichtung der Halteteile eine vergleichsweise große Länge haben, so daß auch Ausgleichsgewichte größerer Länge auf ihrer gesamten Länge zuverlässig angedrückt werden können.

In einer vorteilhaften Ausgestaltung der erfindungsgemäßen Vorrichtung kann das Andrückelement aus einer Blattfeder bestehen, die an ihren beiden Enden gegensinnig umgebogene, an einem Teil der Halteeinrichtung befestigte Abschnitte aufweist und mit ihrem mittleren Bereich die Andrückfläche bildet. Diese Ausgestaltung ist einfach und kostengünstig herstellbar. Sie hat weiterhin den Vorteil, daß sich die Andrückkraft mit ihrem Anstieg von der Mitte ausgehend über die gesamte Länge des Ausgleichsgewichts verteilt und damit auch bei größerer Länge eine gleichmäßige Andrückung des Ausgleichsgewichts gewährleistet.

Nach einem anderen Vorschlag der Erfindung kann das Andrückelement aus zwei voneinander getrennten Blattfederarmen bestehen, die sich von einer Mittelebene der Vorrichtung aus symmetrisch in entgegengesetzte Richtungen erstrecken und mit ihren voneinander entfernten Enden an einem Teil der Halteeinrichtung biegesteif befestigt sind. Vorzugsweise ist hierbei ein Ende eines Blattfederarms mit einer Zunge versehen, die in eine Ausnehmung im Ende des anderen Blattfederarms eingreift. Hierdurch wird die Trennfuge zwischen den Blattfederarmen überbrückt. Die Blattfederarme haben im Vergleich zur einteiligen Blattfeder eine geringere Federsteifigkeit, und ermöglichen dadurch schon bei kleineren Kräften eine Verlagerung des Wirkungsorts der Andrückkraft in den Bereich der Enden eines Ausgleichsgewichts. Die freien, die Andrückfläche bildenden Endbereiche der biegbaren Blattfederarme können erfindungsgemäß auch verdickt ausgeführt sein. Hierdurch wird ihre Formsteifigkeit erhöht, so daß sie auch unter der Belastung durch die Andrückkraft eine vorgegebene Krümmung beibehalten und dementsprechend eine Art Abwälzbewegung auf der Rückenfläche des Ausgleichsgewichts ausführen. Zur Begrenzung der elastischen Verformbarkeit der Blattfeder und der Blattfederarme können an der Halteeinrichtung einstellbare Anschläge angebracht sein.

Um die von der Führungseinrichtung ausgeübte Andrückkraft zu begrenzen, kann nach einem weiteren Vorschlag der Erfindung die Vorrichtung mit einem Meßaufnehmer versehen sein, der die elastische Verformung des Andrückelements erfaßt. Wird ein vorgegebener Sollwert erreicht, so kann die Andrückbewegung der Führungseinrichtung beendet, und nach Lösen der Halteteile die Vorrichtung in eine Ausgangslage für die Befestigung eines neuen Ausgleichsgewichts zurückgefahren werden. Als Meßaufnehmer kann beispielsweise an einem Trägerteil der Halteeinrichtung ein Näherungsschalter vorgesehen sein, der bei einer bestimmten Annäherung des Andrückelements schaltet.

Nach einem weiteren Vorschlag der Erfindung ist vorgesehen, daß die beiderseits des Andrückelements angeordneten Halteteile zum Festhalten des Ausgleichsgewichts an dem verformbaren Teil des Andrückelements geführt sind, so daß sie der Lageänderung des verformbaren Teils folgen. Die Halteteile können daher bis zur Beendigung des Andrückvorgangs das Ausgleichsgewicht festhalten, ohne dadurch die Verformung des Andrückelements zu behindern. Vorzugsweise sind die Halteteile in Linearführungen einer Klemmvorrichtung gelagert, die an dem Andrückelement befestigt ist.

Die Erfindung wird nachfolgend anhand von Ausführungsbeispielen näher erläutert, die in der Zeichnung dargestellt sind. Es zeigen
- Figur 1: eine Vorderansicht einer erfindungsgemäßen Vorrichtung mit einem aus zwei voneinander getrennten Blattfederarmen gebildeten Andrückelement,
- Figur 2: eine Seitenansicht der Vorrichtung gemäß Figur 1,
- Figur 3: eine Vorderansicht einer anderen Ausführungsform einer erfindungsgemäßen Vorrichtung mit zwei voneinander getrennten Blattfederarmen,
- Figur 4: eine Ansicht der Andrückfläche im Bereich der Enden der Blattfederarme der Vorrichtung gemäß Figur 3 und
- Figur 5: eine Vorderansicht einer erfindungsgemäßen Vorrichtung mit einem von einer einzigen Blattfeder gebildeten Andrückelement.

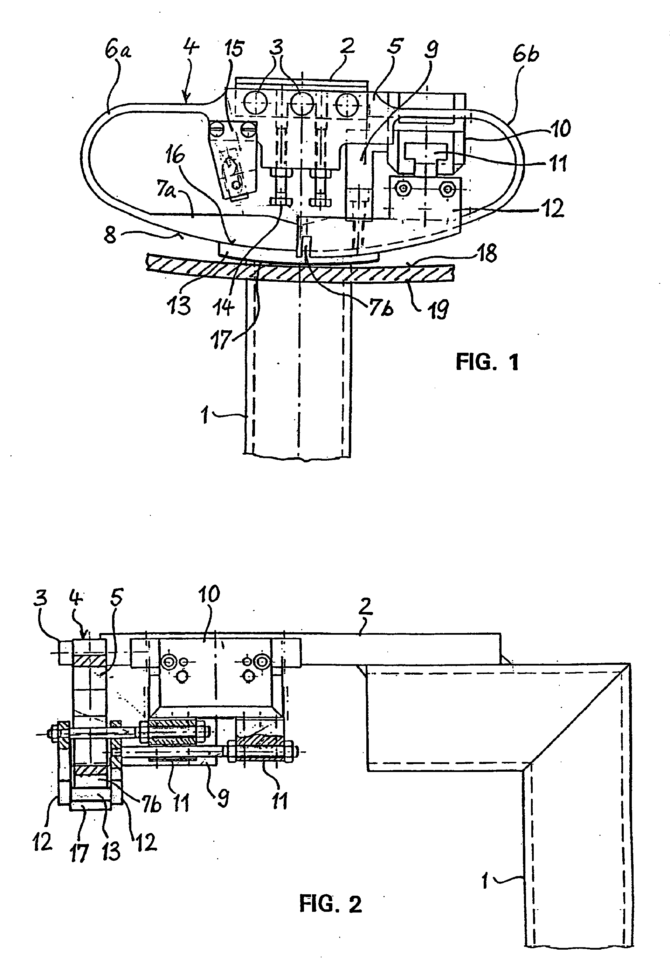

In den Figuren 1 und 2 ist das abgewinkelte Ende 1 des Arms einer Führungseinrichtung, beispielsweise eines Manipulators oder Roboters gezeigt, der das in seiner Größe von einer Auswuchtmaschine ermittelte und dementsprechend abgelängte Auswuchtgewicht an die Auswuchtstelle, beispielsweise eines Fahrzeugrads transportiert und dort mit einer definierten Kraft andrückt. An dem Ende 1 ist eine Platte 2 angebracht, an deren Stirnseite mittels Schrauben 3 ein Andrückelement 4 befestigt ist. Das Andrückelement 4 weist einen mittigen Tragkörper 5 auf, an den auf entgegengesetzten Seiten U-förmig gebogene und symmetrisch zueinander angeordnete Blattfederarme 6a, 6b angeformt sind. Die freien Endbereiche 7a, 7b der Blattfederarme 6a, 6b haben einen dickeren Querschnitt und bilden mit ihrer dem Tragkörper 5 abgekehrten Außenseite eine gleichmäßig konvex gekrümmte Andrückfläche 8. Mit den einander zugekehrten Stirnflächen können sich die Endbereiche 7a, 7b aneinander abstützen, es kann aber auch ein kleiner Zwischenraum vorgesehen sein. An dem Endbereich 7b des in Figur 1 Blattfederarms 6b ist auf der dem Tragkörper 5 zugekehrten Seite eine Stütze 9 durch eine Schraube befestigt, die eine pneumatisch oder elektrisch betätigbare Klemmvorrichtung 10 trägt. Die Klemmvorrichtung 10 weist zwei in einer Geradführung gegensinnig hin und her bewegbare Klemmbacken 11 auf. Jeder Klemmbacken 11 trägt über zwei Verlängerungsstangen ein plattenförmiges Halteteil 12, wobei eines auf der einen Seite und das andere auf der anderen Seite des Endbereichs 7b angeordnet und parallel zu diesem ausgerichtet ist. Die Halteteile 12 ragen mit ihrem der Andrückfläche 8 benachbarten Rand in konstanter Höhe über diese hinaus und erstrecken sich in Längsrichtung über die volle Länge des Endbereichs 7b. Wie die Zeichnung zeigt, kann zwischen den überstehenden Rändern der Halteteile 12 ein Ausgleichsgewicht 13 festgeklemmt werden, dessen Breite größer ist als die Breite der Endbereiche 7a, 7b der Blattfederarme 6a, 6b. Zur Begrenzung der Durchbiegung der Blattfederarme 6a, 6b sind in den Tragkörper 5 zwei einstellbare Anschlagschrauben 14 eingeschraubt, an die sich die Endbereiche 7a, 7b anlegen. Weiterhin ist an dem Tragkörper 5 ein Näherungsschalter 15 befestigt, der dem Endbereich 7a des Blattfederarms 6a gegenüberliegt und bei vorgegebener Annäherung des Endbereichs 7a schaltet.

Zur positionsgenauen Befestigung wird das Ausgleichsgewicht 13 von den Halteteilen 12 so gegriffen, daß es genau mittig auf der Andrückfläche 8 des Andrückelements 4 angeordnet ist, also mit gleichlangen Abschnitten auf jedem Endbereich 7a, 7b aufliegt. Die Krümmung der Andrückfläche 8 ist so gewählt, daß sie der vorgegebenen Krümmung der Rückenfläche 16 des Ausgleichsgewichts 13 entspricht. Das Ausgleichsgewicht 13 liegt daher gleichmäßig mit seiner Rückenfläche 16 auf der Abstützfläche 8 auf. Die Krümmung des Ausgleichsgewichts 13, welches zur Anbringung an einer konkaven Befestigungsfläche 18 eines Fahrzeugrads 19 bestimmt ist, ist so vorgegeben, daß die mit einer Klebeschicht 17 versehene Fläche des Ausgleichsgewichts 13 einen kleineren Krümmungsradius hat, als die Befestigungsfläche des Fahrzeugrads. Zum Anbringen des Ausgleichsgewichts 13 wird die beschriebene Vorrichtung so positioniert, daß das Ausgleichsgewicht 13 beim Andrücken an die Befestigungsfläche 18 zunächst nur mit dem mittleren Bereich der Klebeschicht 17 angedrückt wird. Mit zunehmender Andrückkraft werden dann die Endbereiche 7a, 7b der Blattfederarme 6a, 6b in Richtung auf den Tragkörper 5 gebogen. Hierdurch verlagert sich die Krafteinleitungsstelle von der Mitte des Ausgleichsgewichts 13 in Richtung auf seine Enden, wodurch das Ausgleichsgewicht in voller Länge an die Befestigungsfläche angedrückt und durch die Klebeschicht 17 an dieser befestigt wird. Hat die elastische Verformung der Blattfederarme 6a, 6b das vorgegebene Maß erreicht, so erzeugt der Näherungsschalter 15 ein Schaltsignal, durch welches der Andrückvorgang beendet und die Klemmvorrichtung 10 zur Freigabe des Ausgleichsgewichts 13 in Offenstellung gesteuert wird.

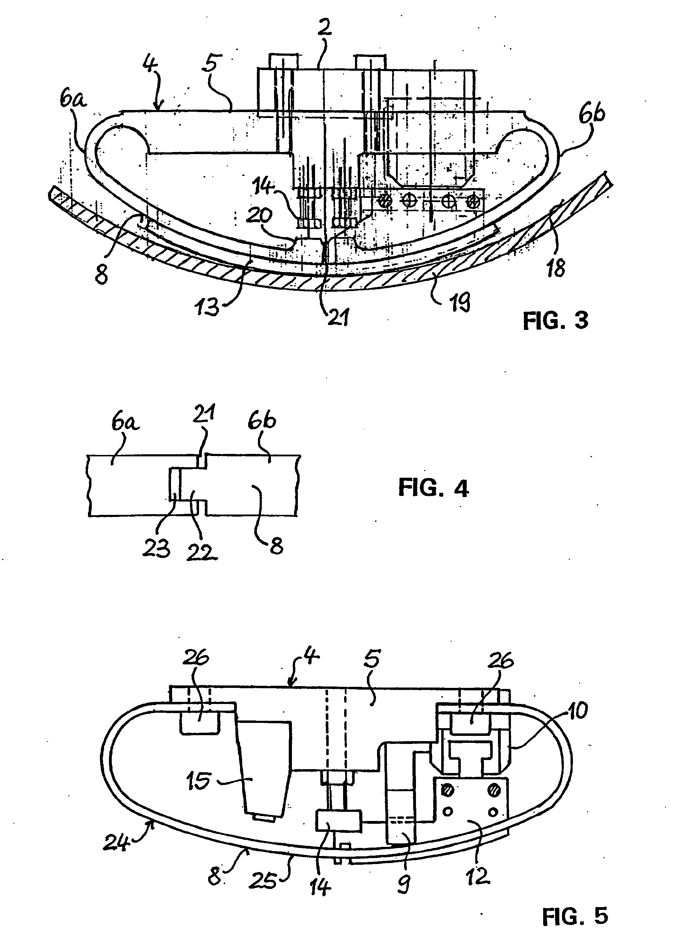

Bei dem in Figur 3 gezeigten Ausführungsbeispiel hat das Andrückelement 4 eine andere Formgestalt. Der an der Platte 2 angeschraubte Tragkörper 5 ist als biegesteifer Balken ausgebildet und hat annähernd die gleiche Länge wie die von den Blattfederarmen 6a, 6b gebildete Andrückfläche 8. Die beiden Blattfederarme 6a, 6b sind mit engem Biegeradius an die Enden des Tragkörpers 5 angeschlossen und derart zueinander gebogen, daß ihre freien Enden mit geringem Abstand einander gegenüberliegen. Der Querschnitt der Blattfederarme 6a, 6b ist konstant. Lediglich die einander gegenüberliegenden, freien Enden sind zur Bildung eines mit den Anschlagschrauben 14 zusammenwirkenden Anschlags 20 verstärkt. Beide Blattfederarme 6a, 6b sind gekrümmt und so zueinander angeordnet, daß die von ihnen gebildete Andrückfläche 8 eine konstante konvexe Krümmung hat, wobei ihr Krümmungsradius um etwas mehr als die radiale Dicke des Ausgleichsgewichts 13 kleiner ist als der kleinste in Frage kommende Krümmungsradius der Befestigungsfläche 18. Da bei dieser Gestaltung sich die freien Enden der Blattfederarme 6a, 6b annähern, wenn diese unter der Wirkung der Andrückkraft in Richtung des Tragkörpers 5 gebogen werden, ist zwischen den freien Enden ein Zwischenraum 21 vorgesehen. Wie aus Figur 4 zu ersehen wird der Zwischenraum 21 von einer Zunge 22 überbrückt, die an dem freien Ende des Blattfederarms 6b angeordnet ist und in eine Aussparung 23 im freien Ende des Blattfederarms 6a eingreift. Hierdurch finden auch Ausgleichsgewichte geringerer Länge eine sichere Abstützung an beiden Blattfederarmen 6a, 6b. Die Zunge 22 kann als separates Teil gefertigt und anschließend an dem Blattfederarm 6a angebracht sein.

In Abweichung von den vorstehend beschriebenen Ausführungsbeispielen weist das Andrückelement 4 der in Figur 5 gezeigten Vorrichtung eine einzige Blattfeder 24 auf. Die Blattfeder 24 hat einen gebogenen Mittelabschnitt 25, der die konvex gekrümmte Andrückfläche 8 bildet. Die beiden Enden der Blattfeder 24 sind in entgegengesetzter Richtung zueinander gebogen und mittels Schrauben 26 an dem Tragkörper 5 des Andrückelements 4 befestigt. Das Federband, aus dem die Blattfeder 24 besteht, ist von gleichbleibender Breite und Dicke. Zur Begrenzung der Durchbiegung des Mittelabschnitts 25 ist wie bei den vorangegangenen Ausführungsbeispielen eine einstellbare Anschlagschraube 14 vorgesehen und ein Näherungsschalter 15 sorgt auch hier für eine Beendigung des Andrückvorgangs wenn der Mittelabschnitt 25 eine vorgegebene Durchbiegung erreicht hat. Die Klemmvorrichtung 10 mit den Halteteilen 12 entspricht der in den Figuren 1 und 2 gezeigten Ausführung und ist wie diese über eine Stütze 9 mit dem Mittelabschnitt 25 verbunden. Eine Durchbiegung des Mittelabschnitts 25 wird somit auch auf die Klemmvorrichtung 10 und die Halteteile 12 übertragen, so daß diese der Bewegung des Mittelabschnitts 25 folgen und nicht an der Befestigungsfläche 18 anstoßen. Wird mit der Vorrichtung gemäß Figur 5 ein Ausgleichsgewicht angedrückt, so verformt sich der Mittelabschnitt 25 der Blattfeder 24 in der Weise, daß sich seine Krümmung verringert. Die anfänglich nur in der Mitte des Ausgleichsgewichts wirksame Andrückkraft verteilt sich daher mit zunehmender Durchbiegung des Mittelabschnitts 25 auf eine immer größere Länge des Ausgleichsgewichts, bis das Ausgleichsgewicht schließlich in voller Länge an die Befestigungsfläche angedrückt wird.

## Patentansprüche

1. Vorrichtung zum Befestigen von eine Klebeschicht aufweisenden Ausgleichsgewichten zum Unwuchtausgleich an einer konkav gekrümmten Befestigungsfläche eines drehbaren Bauteils, insbesondere eines Fahrzeugrades, mit einer Halteeinrichtung, die zwei Halteteile zum Festhalten eines Ausgleichsgewichts und zwischen den Halteteilen ein an eine der Klebeschicht entgegengesetzte Rückenfläche des Ausgleichsgewichts andrückbares Andrückelement aufweist, und mit einer Führungseinrichtung, mit welcher die Halteeinrichtung an die Unwuchtausgleichsstelle der Befestigungsfläche führbar und dort an das drehbare Bauteil andrückbar ist, wobei das Andrückelement (4) eine in Abhängigkeit von der Andrückkraft verformbare Andrückfläche (8) hat, an der das Ausgleichsgewicht (13) mit seiner Rückenfläche (16) anliegt, und die Andrückfläche (8) in der unbelasteten Grundstellung des Andrückelements (4) eine solche Form hat, daß die Andrückkraft im mittleren Bereich des Ausgleichsgewichts (13) übertragen wird und dass mit wachsender Andrückkraft die Andrückfläche (8) derart verformbar ist, daß die Andrückkraft auch auf die Enden des Ausgleichsgewichts (13) übertragen wird, wobei der Krümmungsradius der Andrückfläche (8) um ein die Dicke des Ausgleichsgewichts (13) übersteigendes Maß kleiner ist, als der kleinste Krümmungsradius der Befestigungsfläche (18), für die die Vorrichtung bestimmt ist.

2. Vorrichtung nach Anspruch 1, **dadurch gekennzeichnet, daß** das Andrückelement (4) eine Blattfeder (24) aufweist, die an ihren beiden Enden gegensinnig umgebogene, an einem Teil (5) der Halteeinrichtung befestigte Abschnitte aufweist und mit ihrem mittleren Bereich (25) die Andrückfläche (8) bildet.

3. Vorrichtung nach Anspruch 1, **dadurch gekennzeichnet, daß** das Andrückelement (4) zwei voneinander getrennte Blattfederarme (6a, 6b) aufweist, die sich von einer Mittelebene der Vorrichtung aus symmetrisch in entgegengesetzte Richtungen erstrecken und mit ihren voneinander entfernten Enden an einem Teil (5) der Halteeinrichtung biegesteif befestigt sind.

4. Vorrichtung nach Anspruch 3, **dadurch gekennzeichnet, daß** die freien, die Andrückfläche (8) bildenden Endbereiche der biegbaren Blattfederarme (6a, 6b) biegesteif ausgeführt sind.

5. Vorrichtung nach einem der Ansprüche 3 oder 4, **dadurch gekennzeichnet, daß** das freie Ende eines Blattfederarms (6a) eine Aussparung (23) aufweist, in die eine das freie Ende des anderen Blattfederarms (6b) verlängernde Zunge (22) eingreift.

6. Vorrichtung nach einem der vorhergehenden Ansprüche, **dadurch gekennzeichnet, daß** an der Halteeinrichtung einstellbare Anschläge (14) angebracht sind, die die Durchbiegung der Blattfeder (24) oder der Blattfederarme (6a, 6b) begrenzen.

7. Vorrichtung nach einem der vorhergehenden Ansprüche, **dadurch gekennzeichnet, daß** an einem Trägerteil (5) der Halteeinrichtung ein Meßaufnehmer, beispielsweise ein Näherungsschalter (15), vorgesehen ist, der die elastische Verformung des Andrückelements erfaßt.

8. Vorrichtung nach einem der vorhergehenden Ansprüche, **dadurch gekennzeichnet, daß** die beiderseits des Andrückelements (4) angeordneten Halteteile (12) zum Festhalten des Ausgleichsgewichts (13) an dem verformbaren Teil des Andrückelements (4) geführt sind, so daß sie der Lageänderung des verformbaren Teils folgen.

9. Vorrichtung nach einem der vorhergehenden Ansprüche, **dadurch gekennzeichnet, daß** die Halteteile (12) in Linearführungen einer Klemmvorrichtung (10) gelagert sind, die an dem Andrückelement (4) befestigt ist.

## Claims

1. Device for attaching compensation weights with an adhesive layer onto a concavely curved attachment surface of a rotatable component, in particular a vehicle wheel, for the purpose of unbalance compensation, comprising holding means, with two holding parts for securing a compensation weight and with a pressing element between the holding parts suitable for pressing on a rear surface of the compensation weight opposite from the adhesive layer, and comprising guide means, with which the holding means can be guided to the unbalance compensation site on the attachment surface and there can be pressed on the rotatable component, wherein the pressing element (4) has a pressing surface (8) which can be deformed as a function of the pressing force and on which the rear surface (16) of the compensation weight (13) is positioned, and the pressing surface (8) has, in the unstressed basic position of the pressing element (4), a shape such that the pressing force is transferred in the central region of the compensation weight (13) and such that as the pressing force increases, the pressing surface (8) can be deformed in such a way that the pressing force is also transferred onto the ends of the compensation weight (13), the radius of curvature of the pressing surface (8) being smaller, by an amount exceeding the thickness of the compensation weight (13), than the smallest radius of curvature of the attachment surface (18) for which the device is intended.

2. Device according to claim 1, **characterised in that** the pressing element (4) has a leaf spring (24), which has portions at the two ends thereof that are bent in opposite directions and attached to a part (5) of the holding means, and of which the central region (25) forms the pressing surface (8).

3. Device according to claim 1, **characterised in that** the pressing element (4) comprises two leaf spring arms (6a, 6b), which are separated from one another and extend symmetrically, in opposite directions, from a central plane of the device, and the ends spaced from one another of which are rigidly attached to a part (5) of the holding means.

4. Device according to claim 3, **characterised in that** the free end regions of the flexible leaf spring arms (6a, 6b), which regions form the pressing surface (8), are configured so as to be rigid.

5. Device according to either claim 3 or claim 4, **characterised in that** the free end of one leaf spring arm (6a) has a recess (23) in which a tongue (22), extending the free end of the other leaf spring arm (6b), engages.

6. Device according to any one of the preceding claims, **characterised in that** adjustable stops (14) are mounted on the holding means and limit the deflection of the leaf spring (24) or the leaf spring arms (6a, 6b).

7. Device according to any one of the preceding claims, **characterised in that** a sensor, for example a proximity switch (15), is provided on a carrier part (5) of the holding means and detects the elastic deformation of the pressing element.

8. Device according to any one of the preceding claims, **characterised in that** the holding parts (12) for securing the compensation weight (13), which holding parts are arranged on both sides of the pressing element (4), are guided on the deformable part of the pressing element (4) in such a way as to follow the change of position of said deformable part.

9. Device according to any one of the preceding claims, **characterised in that** the holding parts (12) are supported in linear guides of a clamping mechanism (10) which is attached to the pressing element (4).

## Revendications

1. Dispositif de fixation des masselottes d'équilibrage présentant une couche adhésive afin de compenser le déséquilibre sur une surface de fixation incurvée de manière concave d'un composant rotatif, en particulier d'une roue de véhicule, avec un dispositif de maintien qui comporte deux éléments de maintien permettant de tenir une masselotte d'équilibrage et, entre les éléments de maintien, un élément d'appui pouvant être appuyé sur une surface arrière de la masselotte d'équilibrage opposée à la couche adhésive, et avec un dispositif de guidage grâce auquel le dispositif de maintien peut être guidé à l'emplacement de compensation du déséquilibre de la surface de fixation, et peut être appuyé à cet endroit sur le composant rotatif, l'élément d'appui (4) ayant une surface d'appui (8) pouvant être déformée en fonction de la force d'appui et sur laquelle repose la masselotte d'équilibrage (13) avec sa surface arrière (16), et la surface d'appui (8), dans la position de base non sollicitée de l'élément d'appui (4), ayant une forme telle que la force d'appui est transmise dans la zone médiane de la masselotte d'équilibrage (13), et que, avec une force d'appui croissante, la surface d'appui (8) peut être déformée de telle sorte que la force d'appui est également transmise sur les extrémités de la masselotte d'équilibrage (13), le rayon de courbure de la surface d'appui (8) étant inférieur, d'un ordre dépassant l'épaisseur de la masselotte d'équilibrage (13), au plus petit rayon de courbure de la surface de fixation (18) pour laquelle est prévu le dispositif.

2. Dispositif selon la revendication 1, **caractérisé en ce que** l'élément d'appui (4) présente un ressort à lames (24) qui comporte des sections recourbées en sens inverse au niveau de ses deux extrémités et qui sont fixées sur une partie (5) du dispositif de maintien, et qui forme, avec sa zone médiane (25), la surface d'appui (8).

3. Dispositif selon la revendication 1, **caractérisé en ce que** l'élément d'appui (4) présente deux bras de ressort à lames (6a, 6b) séparés l'un de l'autre qui s'étendent à partir d'un plan médian du dispositif de manière symétrique en direction opposés, et qui sont fixés, de manière résistante à la flexion, avec leurs extrémités éloignées l'une de l'autre sur une partie (5) du dispositif de maintien.

4. Dispositif selon la revendication 3, **caractérisé en ce que** les zones d'extrémité libres, formant la surface d'appui (8), des bras de ressort à lames (6a, 6b) flexibles sont réalisées de manière résistante à la flexion.

5. Dispositif selon l'une des revendications 3 ou 4, **caractérisé en ce que** l'extrémité libre d'un bras de ressort à lames (6a) présente un évidement (23) dans lequel s'engage une languette (32) prolongeant l'extrémité libre de l'autre bras du ressort à lames (6b).

6. Dispositif selon l'une des revendications précédentes, **caractérisé en ce que**, des butées (14) sont disposées sur le dispositif de maintien de façon à pouvoir être réglées, lesquelles limitent la courbure du ressort à lames (24) ou des bras du ressort à lames (6a, 6b).

7. Dispositif selon l'une des revendications précédentes, **caractérisé en ce qu'**un capteur de mesure, par exemple un détecteur de proximité (15), est prévu sur un élément de support (5) du dispositif de maintien, lequel capteur mesure la déformation élastique de l'élément d'appui.

8. Dispositif selon l'une des revendications précédentes, **caractérisé en ce que** les éléments de maintien (12), disposés des deux côtés de l'élément d'appui (4), permettant de tenir la masselotte d'équilibrage (13), sont guidés sur la partie déformable de l'élément d'appui (4), de telle sorte qu'ils suivent la variation de position de la partie déformable.

9. Dispositif selon l'une des revendications précédentes, **caractérisé en ce que** les éléments de maintien (12) sont disposés dans des guides linéaires d'un dispositif de serrage (10) qui est fixé sur l'élément d'appui (4).
